(19) Europäisches Patentamt
European Patent Office
Office européen des brevets

(11) EP 2 444 430 A1

(12) **EUROPEAN PATENT APPLICATION**
published in accordance with Art. 153(4) EPC

(43) Date of publication:
**25.04.2012 Bulletin 2012/17**

(21) Application number: **10789516.1**

(22) Date of filing: **16.06.2010**

(51) Int Cl.:
***C08F 299/06*** *(2006.01)*
***B32B 27/30*** *(2006.01)*
***C08G 18/67*** *(2006.01)*
***C09D 4/00*** *(2006.01)*
***C09D 4/02*** *(2006.01)*
***C09D 5/16*** *(2006.01)*
***C09D 7/12*** *(2006.01)*

(86) International application number:
**PCT/JP2010/060194**

(87) International publication number:
**WO 2010/147142 (23.12.2010 Gazette 2010/51)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **16.06.2009 JP 2009143569**
**28.12.2009 JP 2009298389**

(71) Applicant: **Mitsubishi Rayon Co., Ltd.**
**Minato-ku**
**Tokyo 108-8506 (JP)**

(72) Inventors:
- **OKAFUJI, Hiroshi**
**Otake-shi**
**Hiroshima 739-0693 (JP)**
- **YAMAZAWA, Hideto**
**Otake-shi**
**Hiroshima 739-0693 (JP)**

(74) Representative: **TER MEER - STEINMEISTER & PARTNER GbR**
**Patentanwälte**
**Mauerkircherstrasse 45**
**81679 München (DE)**

(54) **ANTI-SOILING COMPOSITION, ANTI-SOILING FILM, ANTI-SOILING LAMINATED FILM, TRANSFER FILM, AND RESIN LAMINATE, AND METHOD FOR MANUFACTURING RESIN LAMINATE**

(57) An anti-soiling composition including: compound (A) having a perfluoropolyether group and an active energy ray-reactive group; and inorganic fine particles (B), wherein compound (A) is contained in an amount of 20 parts by mass or more and 75 parts by mass or less in 100 parts by mass of a solid content of the composition.

EP 2 444 430 A1

## Description

Technical Field

The present invention relates to an anti-soiling composition, an anti-soiling film, an anti-soiling laminated film, a transfer film, a resin laminate and a method for manufacturing the resin laminate.

Background Art

Transparent resins such as an acrylic resin and a polycarbonate resin have been widely used for front panels (protective plates) of solar batteries, industrial materials, building materials, etc.

In particular, recently owing to transparency and shock resistance thereof, the transparent resins have been used for front panels of various displays such as a CRT, a liquid crystal television and a plasma display.

Recently, it has been desired to add various functions to the front panels. An antireflection function is one of the desired functions. The antireflection function reduces reflection of light incident upon the front panel from an interior fluorescent lamp, etc., to display an image much clearer. A method for adding a function such as an antireflection function includes a method for forming a functional layer like an antireflection layer on the surface of the front panel.

An anti-soiling function, particularly a water repellent function and an oil repellent function, are desirably added to the surface of the functional layer such as an antireflection layer. This is because in the case that soil is attached to the surface of the antireflection layer, the color of the attached portion is significantly changed, so that it causes decreasing visibility of an image on a display member.

For adding an anti-soiling property, particularly a water repellent property and an oil repellent property, to a substrate surface, compositions containing fluorine-containing compounds are disclosed (for example, Patent Literatures 1 and 2). However, substrates to which the above compositions are applicable are often limited. To be more specific, in the case that a functional layer of a substrate is formed by a transfer method described later, the performance thereof is not expressed or often insufficient.

Similarly to the front panel of a display, also in the case of the front panel of a solar battery formed with a transparent resin, it is desired to add an antireflection layer to the front-panel surface. In the case that the antireflection layer is formed, reflection of sunlight can be reduced, thereby it is improved the transmittance of light reaching the cells of a solar battery. Furthermore, in addition to the antireflection layer, it is desired to provide an anti-soiling layer to the top surface of the front panel of a solar battery in order to suppress reduction in transmission of sunlight by soil deposition.

In the meantime, a method for adding an antireflection function to a display surface is disclosed (for example, Patent Literature 3), in which an anti-reflection film is formed with a continuous coating system and bonded to the display surface. Furthermore, a window film is disclosed (Patent Literature 4), in which a hard coat layer and a thin-film coating layer formed from a coating liquid containing a silicon alkoxide are formed on one of the surfaces of a plastic film and a sticky layer is formed on the other surface. However, since the anti-reflection film and the window film contain substrate films, there occurs the following problems which are increasing in a haze value, peeling of a film occurring at the time of cutting, difficulty in secondary processing, and generation of air bubbles in the interface between the films and the substrates (a display surface and a window surface) during an endurance test (80˚C).

In contract to such techniques, a method for transferring an anti-soiling layer and an antireflection layer (a transfer layer) that are formed on a flexible film (a stripping layer) to a less flexible substrate (the surface of a transfer material-receiving body) by a thermal transfer or a pressure-sensitive transfer is disclosed (for example, Patent Literature 5). However, it is difficult to add an anti-soiling function, particularly a water repellent function and an oil repellent function, together with an antireflection function, to the surface of the transfer material-receiving body in a wet process, as described in Patent Literature 5. For overcoming of this problem, Patent Literature 5 discloses a method for preparing an anti-soiling layer with a dry process (CVD). However, this method has a problem in high cost.

Furthermore, Patent Literature 6 discloses a transfer film having a mold-releasing layer, an anti-soiling layer, an antireflection layer and an adhesive layer, which are sequentially formed on one of the surfaces of a plastic film. This transfer method using the transfer film enables to add an anti-soiling property and an antireflection function to a substrate surface. However, in the case where an alkoxysilane layer is used as an anti-soiling layer, a water repellant property can be added but an oil repellent property cannot be added to the transfer material-receiving body, and perspiration resistance is low since alkoxysilane dissolves under a basic condition. Furthermore, when an antireflection layer is formed with a wet process, adhesion to a base material is poor as long as a primer is not provided. In addition to these problems, there is a problem in that hardness is insufficient in the case that a fluorine-containing resin layer is used as an anti-soiling layer. Furthermore, since an anti-soiling layer is formed on a stripping layer having a high critical surface tension, it is difficult to concentrate an anti-soiling component onto an interface with the stripping layer, in other words, a product surface after transferred. Thus the anti-soiling property is insufficient. Moreover, when an antireflection layer is formed on an anti-soiling layer with a wet method, since the critical surface tension of the anti-soiling layer is low,

wettability is low. Accordingly a coating liquid is likely to be repelled. Because of the problems, it is difficult to manufacture a multi-layered laminate having a functional layer such as an antireflection layer and an anti-soiling layer, with a wet method.

Citation List

Patent Literature

Patent Literature 1: International Publication No. WO 2003/002628

Patent Literature 2: JP2005-126453A

Patent Literature 3: JP2009-3354A

Patent Literature 4: JP2000-94584A

Patent Literature 5: JP2005-96322A

Patent Literature 6: JP2003-103680A

Summary of Invention

Technical Problem

An object of the present invention is to provide an anti-soiling composition, an anti-soiling film, an anti-soiling laminated film and a transfer film suitable for easily and effectively adding an anti-soiling function to a substrate.
Furthermore, another object of the present invention is to provide a laminate excellent in anti-soiling property and a method for manufacturing the laminate.

Solution to Problem

According to an aspect of the present invention, there is provided an anti-soiling composition including: a compound (A) having a perfluoropolyether group and an active energy ray-reactive group; and inorganic fine particles (B), wherein the compound (A) is contained in an amount of 20 parts by mass or more and 75 parts by mass or less in 100 parts by mass of a solid content of the composition.
Furthermore, according to another aspect of the present invention, there is provided an anti-soiling film formed of the anti-soiling composition.
Furthermore, according to another aspect of the present invention, there is provided an anti-soiling laminated film containing: the anti-soiling film; and a functional layer provided on the anti-soiling film.
Furthermore, according to another aspect of the present invention, there is provided a transfer film containing a substrate film; and the anti-soiling film or the anti-soiling laminated film, the film being formed on a surface of the substrate film.
Furthermore, according to another aspect of the present invention, there is provided a resin laminate containing a resin substrate; and the anti-soiling film or the anti-soiling laminated film, the film being provided on the resin substrate.
Furthermore, according to another aspect of the present invention, there is provided a method for manufacturing a resin laminate, containing:

forming the anti-soiling film or the anti-soiling laminated film on the surface of a substrate film, thereby obtaining a transfer film;
laminating the anti-soiling film or the anti-soiling laminated film of the surface of the transfer film and a resin substrate with an adhesive layer between the films; and
removing the substrate film while leaving the adhesive layer and the anti-soiling film or the anti-soiling laminated film on the resin substrate, thereby obtaining a resin laminate having the anti-soiling film or the anti-soiling laminated film provided on the resin substrate with the adhesive layer between the film and the resin substrate.

Furthermore, according to another aspect of the present invention, there is provided the above manufacturing

method, wherein, in the laminating, the anti-soiling film or the anti-soiling laminated film of the surface of the transfer film and the resin substrate are laminated with an active energy ray-curable mixture between the film and the resin substrate, the mixture serving as the adhesive layer, and
the active energy ray-curable mixture is cured with application of an active energy ray through the transfer film and a cured coating film layer is formed.

Advantageous Effects of Invention

According to an aspect of the present invention, it is possible to provide an anti-soiling composition, an anti-soiling film, an anti-soiling laminated film and a transfer film suitable for easily and effectively adding an anti-soiling function to a substrate.
According to another aspect of the present invention, it is possible to provide a laminate excellent in anti-soiling property and also provide a method for manufacturing the laminate at low cost.

Description of Embodiments

An anti-soiling composition according to an embodiment of the present invention contains a compound (A) having a perfluoropolyether group and an active energy ray-reactive group, and inorganic fine particles (B).
The perfluoropolyether group of the compound (A) is preferably a group that is introduced by means of a bond formed through a reaction with the active hydrogen of an active-hydrogen containing-perfluoropolyether compound. For example, it is preferred that a perfluoropolyether compound having at least one hydroxy group form a urethane bond through the reaction between the hydroxyl group and an isocyanate group, and is introduced through the urethane bond. The active hydrogen (for example, a hydroxy group) of the perfluoropolyether compound is preferably bonded to one or both molecular ends. Furthermore, the perfluoropolyether compound is preferably a polyether compound containing a chain having at least one fluorinated alkylene oxide unit selected from $-OCF_2-$, $-OCF_2CF_2-$, $-OCF_2CF_2CF_2-$ and $-OCF(CF_3)CF_2-$, and more preferably, a polyether compound containing a chain having at least one fluorinated alkylene oxide unit selected from $-OCF_2-$, $-OCF_2CF_2-$ and $-OCF_2CF_2CF_2-$. As the polyether compound, a polyether compound having a molecular weight of, for example, 500 to 5,000, particularly 1,000 to 3,000 can be used.
The active energy ray-reactive group of the compound (A) is preferably a group having a carbon-carbon double bond, and includes a vinyl group or a (meth)acryloyfoxy group, for example. The compound (A) preferably has at least two active energy ray-reactive groups in a molecule. These active energy ray-reactive groups are preferably provided independently of a perfluoropolyether group; in other words, preferably, the active energy ray-reactive groups do not bind to the perfluoropolyether group.
The compound (A) is a compound obtained through, for example, a reaction between a triisocyanate (C), which is a cyclic trimer of a diisocyanate, and an active hydrogen-containing compound (D).
As the triisocyanate (C), there can be used a compound that has an isocyanurate ring containing three nitrogen atoms to each of which a group containing an isocyanate group is bonded.
As the diisocyanate to be used for obtaining triisocyanate (C), there are mentioned an aliphatic compound and an alicyclic compound, which have two isocyanate groups. Examples thereof include hexamethylene diisocyanate, isophorone diisocyanate, hydrogenated xylylene diisocyanate and dicyclohexylmethane diisocyanate. Alternatively, as the diisocyanate to be used for obtaining triisocyanate (C), an aromatic compound having two isocyanate groups is mentioned. Examples thereof include xylylene diisocyanate, tolylene diisocyanate, diphenyl methane diisocyanate and naphthalene diisocyanate.
The active hydrogen-containing compound (D) is a compound containing active hydrogen such as hydrogen in a hydroxy group, more specifically, is a combination of at least two active hydrogen-containing compounds. The active hydrogen-containing compound (D) contains perfluoropolyether (D-1) having an active hydrogen and a monomer (D-2) having an active hydrogen and a carbon-carbon double bond. The active hydrogen-containing compound (D) can further include another compound containing an active hydrogen and neither a perfluoropolyether group nor a carbon-carbon double bond.
As the perfluoropolyether (D-1) having an active hydrogen, for example, there is mentioned a compound having a single hydroxy group at one of the molecular ends and a perfluoropolyether group. The perfluoropolyether (D-1) is preferably a compound represented by the general formula (1).
[Formula 1]

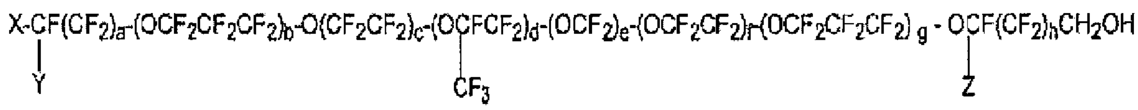

(1)

wherein X is a fluorine atom or $-CH_2OH$; each of Y and Z is a fluorine atom or a trifluoromethyl group, respectively; a is an integer of 1 to 16; c is an integer of 0 to 5; each of b, d, e, f, and g is an integer of 0 to 200, respectively; and h is an integer of 0 to 16. Any one of b to h is 1 or more.

In the case that the numerical values of a to h in the formula are excessively large, the molecular weight of the compound increases and solubility thereof tends to decrease. In contrast, in the case that the numerical values of a to h in the formula are excessively small, water repellant property and oil repellent property tend to decrease.

The monomer (D-2) having an active hydrogen and a carbon-carbon double bond is preferably a monomer having a hydroxy group as a group having the active hydrogen and a vinyl group as a carbon-carbon double bond, and more preferably (meth)acrylic acid ester having a hydroxy group and a vinyl monomer having a hydroxy group. As the monomer (D-2), at least one monomer selected from 2-hydroxyethyl (meth)acrylate, 2-hydroxypropyl (meth)acrylate and 2-hydroxybutyl (meth)acrylate can be used.

The compound (A) can be obtained with a reaction of a perfluoropolyether (D-1) with a single isocyanate group of a triisocyanate (C) and with a reaction of a monomer (D-2) with the remaining two isocyanate groups.

In the reaction between a triisocyanate (C) and an active hydrogen-containing compound (D), the triisocyanate (C) may be simultaneously or sequentially reacted with a perfluoropolyether (D-1) and monomer (D-2).

As the compound (A), for example, there can be used a product resulting from binding, for example, one of the isocyanate groups of a triisocyanate (C) and the hydroxy group of perfluoropolyether (D-1) and binding each of the remaining two isocyanate groups and a hydroxy group of a monomer (D-2), in other words, a compound in which a single perfluoropolyether group and two vinyl groups (or (meth)acryloyloxy groups) are bonded to a single isocyanurate ring each via urethane bond.

The compound (A) is preferably a compound represented by the following general formula (2) since satisfactory water repellant property and oil repellent property are obtained.

[Formula 2]

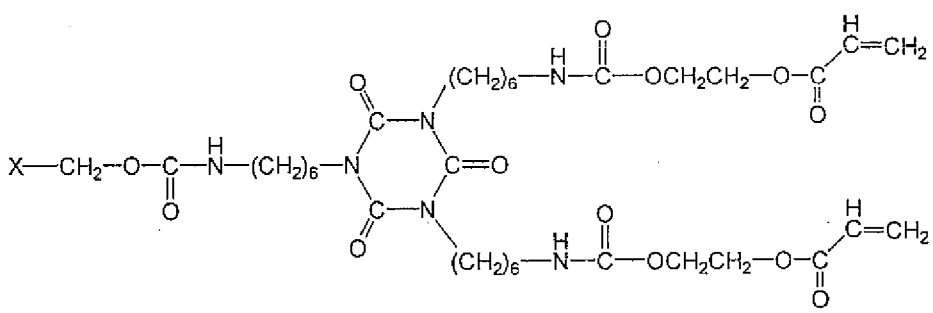

(2)

wherein X represents a perfluoropolyether group.

The perfluoropolyether group represented by X in the formula (2) is preferably introduced with use of a perfluoropolyether compound represented by the formula (1).

As another example of the compound (A), a compound obtained by reacting a compound (E) having an isocyanate group and one or two (meth)acryloyloxy groups in the same compound with a perfluoropolyether (F) having at least one active hydrogen at a molecular end, may be employed.

As the perfluoropolyether (F) having at least one active hydrogen at a molecular end, a commercially available product can be used. Examples thereof include perfluoropolyether diols such as FLUOROLINK D10H (product name),

FLUOROLINK D (product name), and FLUOROLINK D4000 (product name), which are manufactured by Solvay Solexis.

As the compound (E) having an isocyanate group and one or two (meth)acryloyloxy groups in the same compound, a commercially available product can be used. Examples thereof include Karenz BEI (product name) (1,1-bis(acryloyloxymethyl)ethyl isocyanate), Karenz AOI (product name) (2-acryloyloxyethyl isocyanate) and Karenz MOI (product name) (2-methacryloyloxyethyl isocyanate) (product names), which are manufactured by Showa Denko K.K.

As the compound (A), for example, there can be used a product resulted from binding, for example, an isocyanate group of a compound (E) and a hydroxy group of a compound (F), in other words, a compound having a single perfluoropolyether group and one or two (preferably, two) vinyl groups (or (meth)acryloyloxy groups) independently within a molecule. The term "independently" used herein means that a (meth)acryloyloxy group does not bind to a perfluoropolyether group. For example, a compound in which a single perfluoropolyether group and one or two (preferably, two) (meth)acryloyloxy groups bind to a hydrocarbon group having 2 to 6 carbon atoms (preferably, 3 to 6 carbon atoms) is mentioned.

The amount of compound (A) contained in an anti-soiling composition is 20 parts by mass or more and 75 parts by mass or less in 100 parts by mass of a solid content of the composition. In the case that the amount falls within the range, the surface layer of an anti-soiling film formed of the composition or a resin laminate, which is obtained by transferring an anti-soling laminated film comprising the anti-soiling film and a functional layer provided on the anti-soiling film, has satisfactory water repellant property, oil repellent property and hardness. The term "solid content" used herein refers to the content of components excluding a solvent.

Inorganic fine particles (B) contained in an anti-soiling composition will be described. Examples of the inorganic fine particles that can be used include low refractive-index fine particles such as colloidal silica, porous silica, hollow silica, magnesium fluoride and ice stone; and high refractive-index fine particles such as Zr02, $TiO_2$, NbO, ITO, ATO, $SbO_2$, $In_2O_3$, $SnO_2$ and ZnO.

In particular, in the case that an antireflection laminate is prepared by a transfer method, since the antireflection laminate preferably has an anti-soiling function simultaneously with a low refractive-index function, low refractive-index fine particles having a refractive index of 1.5 or less are preferably used as the inorganic fine particles. Furthermore, to improve the strength of an anti-soiling film such as hardness, it is preferred to treat the surface of inorganic fine particles with a hydrolyzable silane compound. For the reason, it is preferable to use silica fine particles which are to be easily hydrolyzed, and it is more preferable to use hollow silica having a low refractive-index and liable to reduce reflectance. In the case that such low refractive-index fine particles are used there can be obtained, a single layer having not only an anti-soiling function but also low refractive-index function. This is advantageous to reduce costs. Furthermore, hollow silica is more preferable since it has not only a low refractive-index but also satisfactory water repellant property of the transferred laminate.

Treating the surface of inorganic particles with a hydrolyzable silane compound is preferred since the water repellant property of a transferred film becomes satisfactory.

When a hydrolyzable silane compound is reacted to the surface of inorganic fine particles (B), the blending ratio of them, more specifically, the ratio of inorganic fine particles (B) in the total amount of hydrolyzable silane compound and the inorganic fine particles (B) is preferably 30 to 70 % by mass and more preferably 40 to 65 % by mass, in view of abrasion property, perspiration resistance and water repellant property of the transferred film surface.

Examples of the hydrolyzable silane compound for use in treating the surface of inorganic fine particles include 3-methacryloxypropyl trimethoxysilane, 3-methacryloxypropylmethyl dimethoxysilane, 3-methacryloxypropylmethyl diethoxysilane, 3-methacryloxypropyl triethoxysilane, p-styryl trimethoxysilane, 2-(3,4-epoxycyclohexyl)ethyl trimethoxysilane, 3-glycidoxypropyl trimethoxysilane, 3-glycidoxypropylmethyl diethoxysilane and 3-acryloxypropyl trimethoxysilane. Since a compound (A) has an unsaturated bond, a silane coupling agent preferably has the same unsaturated bond.

To an anti-soiling composition, a photoinitiator may be added. Examples of the photoinitiator include carbonyl compounds such as benzoin, benzoin methyl ether, benzoin ethyl ether, benzoin isopropyl ether, benzoin isobutyl ether, acetoin, butyroin, toluoyne, benzyl, benzophenone, p-methoxybenzophenone, 2,2-diethoxyacetophenone, $\alpha,\alpha$-dimethoxy-$\alpha$-phenyl acetophenone, methyl phenyl glyoxylate, ethyl phenyl glyoxylate, 4,4'-bis(dimethylamino)benzophenone, 1-hydroxy-cyclohexyl-phenyl-ketone and 2-hydroxy-2-methyl-1-phenylpropan-1-one; sulfur compounds such as tetramethyl thiuram monosulfide and tetramethyl thiuram disulfide; and phosphorus compounds such as 2,4,6-trimethylbenzoyl diphenylphosphine oxide, bis(2,4,6-trimethylbenzoyl)-phenyl phosphine oxide and benzoyl diethoxyphosphine oxide.

The addition amount of photoinitiator in 100 parts by mass of the solid content of an anti-soiling composition is preferably 0.1 part by mass or more in view of hardenability due to ultraviolet irradiation, and preferably 15 parts by mass or less in view of maintaining good color tone of an anti-soiling film. Furthermore, a photoinitiator may be used alone or in combination.

To an anti-soiling composition, if necessary, there may be added various types of components, such as a slip-property improver, a leveling agent, a photostabilizer (UV absorber, HALS, etc.). In view of transparency of an anti-soiling film, there may be preferably 10 parts by mass or less of the addition amount thereof in 100 parts by mass of the solid content of the anti-soiling composition.

To an anti-soiling composition, a known dilution solvent can be added. There can be used a solvent such as methyl ethyl ketone, methyl isobutyl ketone, isopropyl alcohol, ethanol or 1-methoxy-2-propanol. Furthermore, a fluorine solvent such as 2,2,3,3-tetrafluoro-1-propanol may be used. Regarding the dilution concentration of a solid content of an anti-soiling composition, the solid content concentration is preferably 0.1 % by mass to 20 % by mass and more preferably 0.1 % by mass to 2 % by mass. The dilution concentration within the range is preferable since the anti-soiling composition has good storage stability and the thickness of a film obtained from the composition can be easily controlled to be a desired film thickness. If the dilution concentration is excessively high, a solid matter sometimes precipitates. In contrast, if the dilution concentration is excessively low, it may become difficult to form a thick film.

To an anti-soiling composition, a compound having at least two (meth)acryloyloxy groups in a molecule described later may be added.

An anti-soiling film will be described. As a substrate for forming an anti-soiling film, an active energy ray-permeable film is preferable and a known film can be used. A film having release properties is more preferable. In the case that the release properties are insufficient, a stripping layer may be provided on the surface of a substrate film.

Examples of the substrate film include synthetic resin films such as a polyethylene terephthalate film, a polypropylene film, a polycarbonate film, a polystyrene film, a polyamide film, a polyamideimide film, a polyethylene film and a poly(vinylchloride) film; cellulose-based films such as a cellulose acetate film; film-form paper such as western paper such as cellophane paper and glassine paper, and Japanese paper; and composite films of these and composite sheets of these; and an active energy ray-permeable film obtained by providing a stripping layer to these.

The thickness of a substrate film is not particularly limited; however, the thickness is preferably 4 μm or more since a transfer film can be easily manufactured without wrinkle and crack, more preferably 12 μm or more, further preferably 30 μm or more, and preferably 500 μm or less, more preferably 150 μm or less and further preferably 120 μm or less.

In the case that the release properties of the substrate film are insufficient, a stripping layer may be formed on the substrate film. A material for forming a stripping layer can be appropriately selected from polymers and waxes for forming known stripping layers and put in use. A method for forming a stripping layer is, for example, as follows. A coating material is prepared with dissolving of a resin such as paraffin wax, an acrylic resin, a urethane resin, a silicone resin, a melamine resin, a urea resin, a urea-melamine resin, a cellulose resin and a benzoguanamine resin and a surfactant, singly or with a mixture of these as a main component in an organic solvent or water. The coating material is applied onto the substrate film by a conventional printing method such as a gravure printing method, a screen printing method or an offset printing method, followed with drying and obtaining of a stripping layer. Alternatively, there may be formed a curable coating film containing a thermosetting resin, an ultraviolet curable resin, an electron beam curable resin or a radioactive ray-curable resin, followed with curing and forming of a stripping layer. The thickness of the stripping layer is not particularly limited; however the range of about 0.1 μm to 3 μm is appropriately employed. In the case that the stripping layer is extremely thin, the effect of improving release properties may reduce. Conversely, in the case that the stripping layer is extremely thick, release properties may become excessively high. So that, layers on the substrate film may be sometimes removed before a transfer step. A substrate film or a substrate film having a stripping layer provided thereon can be used as a stripping film.

On the surface of the substrate film, an anti-soiling composition is applied and a solvent is evaporated to dryness, and then an anti-soiling film is formed. The film thickness of the anti-soiling film is preferably, 10 nm to 1.3 μm, more preferably 60 nm to 300 nm and further preferably 60 nm to 110 nm. In the case that the thickness falls within the range, there can be obtained an anti-soiling film excellent in a water repellent property, an oil repellent property, abrasion-resistance and optical properties.

Examples of a method for applying an anti-soiling composition include, but are not particularly limited, a casting method, a roller coating method, a bar coating method, a spray coating method, an air-knife coating method, a spin coating method, a flow-coating method, a curtain coating method, a film covering method and a dipping method.

After an anti-soiling composition is applied to forming of an anti-soiling film, the anti-soiling film may be cured and there may be formed a cured anti-soiling film with application of an active energy ray such as an electron beam, a radioactive ray or an ultraviolet ray to the anti-soiling film.

A functional layer may be formed on the anti-soiling film or cured anti-soiling film and an anti-soiling laminated film may be formed. As the functional layer, at least one of a low refractive-index layer, a high refractive-index layer, a hard coat layer and an antistatic layer can be provided.

As a component for forming a low refractive-index layer, a component having a refractive index of about 1.3 to 1.5 is preferred. Examples of the low refractive-index layer include a layer formed of a curable condensation polymer-compound having a siloxane bond as a major bond, which is formed with using of an alkoxy silane or an alkylalkoxy silane, for example. Specific examples thereof include a low refractive-index layer formed of a siloxane resin compound having a siloxane bond partly substituted with e.g., a hydrogen atom, a hydroxy group, an unsaturated group or an alkoxyl group.

Furthermore, it is preferred to add colloidal silica to a siloxane resin layer in view of further reducing a refractive-index. Colloidal silica is a colloidal solution of silica, which is obtained with dispersing of fine particles of porous silica and/or non-porous silica in a dispersion medium. The porous silica used herein is a low-density silica containing air within a particle in the form of pores or hollow. The refractive index of the porous silica is 1.20 to 1.40, which is lower than the refractive index (1.45 to 1.47) of general silica. Therefore, in the present invention, for reducing the refractive index of a low refractive-index layer, porous silica is more preferably used.

In addition, a low refractive-index layer may be formed with addition of colloidal silica to an ultraviolet curable mixture described later and with curing of the mixture. Furthermore, there may be used colloidal silica whose surface is treated with a silane coupling agent.

These curable compounds are cured with application of an active energy ray such as an electron beam, radioactive ray or ultraviolet ray, or cured with application of heat. These curable compounds may be used alone or in combination.

The total thickness of an anti-soiling film and a low refractive-index layer is preferably 50 nm to 200 nm and more preferably, 70 nm to 150 nm. In the case that the thickness falls within the range, reflection of light having a visible wavelength can be sufficiently suppressed. Furthermore, since transmittance is improved, the film can be suitably used as a front panel of a solar battery.

In the case that an anti-soiling film also has a low refractive-index function, a high refractive-index layer may be directly formed on the anti-soiling film, and an antireflection layer can be formed. After a low refractive-index layer is provided on an anti-soiling film, a high refractive-index layer may be provided.

As a component for forming a high refractive-index layer, a component having a refractive index of about 1.6 to 2.0 is preferable. There can be used a component containing a metal alkoxide which is auto-hydrolyzed to form a metal oxide and forms a dense film. The metal alkoxide is preferably represented by the following formula:

$$M(OR)_m$$

wherein M represents a metal; R represents a hydrocarbon group having 1 to 5 carbon atoms; m represents atomic valence (3 or 4) of metal M. Examples of metal M include titanium, aluminium, zirconium and tin. In particular, titanium is suitable. Specific examples of metal alkoxide include, titanium methoxide, titanium ethoxide, titanium n-propoxide, titanium isopropoxide, titanium n-butoxide, titanium isobutoxide, aluminum ethoxide, aluminum isopropoxide, aluminum butoxide, aluminum t-butoxide, tin t-butoxide, zirconium ethoxide, zirconium n-propoxide, zirconium isopropoxide and zirconium n-butoxide.

Furthermore, to a metal alkoxide forming a metal oxide, there may be added tin oxide, antimony-doped tin oxide (ATO), indium oxide, a tin-doped indium oxide (ITO), a zinc oxide, an aluminum-doped zinc oxide, zinc antimonate, antimony pentaoxide or the like. At least one kind of high refractive-index metal oxide fine particle selected from the fine particles formed of these metal oxides, is preferably added in order to further increase a refractive index. Furthermore, since these metal oxide fine particles have antistatic performance, they are preferably used for adding an antistatic function.

Furthermore, a high refractive-index antistatic layer may be formed with addition of metal oxide fine particles of a high refractive-index to an ultraviolet curable mixture described later, followed with curing. There may be used metal oxide fine particles of a high refractive-index whose surface is treated. A method for forming a high refractive-index layer by adding metal oxide fine particles of a high refractive-index to an ultraviolet curable mixture, followed by curing is preferable since a satisfactory productivity is attained.

The film thickness of the high refractive-index layer is preferably 0.1 $\mu$m to 10 $\mu$m, In the case that the film thickness falls within the range, the film has sufficient surface hardness and transparency, and improves appearance.

In the case where an antistatic layer is provided to add an antistatic function, satisfactory antistatic performance can be obtained in the case that the film thickness falls within the range of 0.1 $\mu$m to 10 $\mu$m. The antistatic layer can be formed of a coating film material containing the aforementioned metal oxide fine particles having antistatic performance.

The surface resistance value of a functional layer serving as an antistatic layer is preferably $10^{10}$ Ω/□ or less and more preferably $10^8$ Ω/□ or less. In the case that the surface resistance value falls within the range, the antistatic performance of the resultant laminate is sufficient.

A hard coat layer having a hard coat function of improving the abrasion-resistance of a laminate surface is formed with curing of a curable mixture containing various types of curable compounds bringing the abrasion-resistance, with a film form. Examples of the curable mixture include a curable mixture comprising a curable radical polymerizable compound, such as an ultraviolet curable mixture described later, and a curable mixture comprising a curable condensation polymerzable compound such as alkoxy silane and alkylalkoxy silane. These curable compounds can be cured with application of an active energy ray such as an electron beam, radioactive ray or ultraviolet ray, or with application of heat. These curable compounds may be used alone or in combination. Note that, in the case that a curable compound is used alone, the term "curable mixture" is used for convenience sake. In the case that an antistatic agent, for example, the aforementioned metal oxide fine particles having an antistatic function is added to the curable mixture, a hard coat

layer having an antistatic function can be formed. Furthermore, in the case that a high refractive-index material or a high refractive-index material having an antistatic function is added to the curable mixture, a high refractive-index hard coat layer having an antistatic function can be formed.

In the present invention, the hard coat layer is preferably obtained with curing by ultraviolet ray in view of productivity and physical properties. Next, an ultraviolet curable mixture will be described.

As the ultraviolet curable mixture, an ultraviolet curable mixture containing a compound having at least two (meth)acryloyloxy groups in a molecule, and an active energy ray-decomposable polymerization initiator is preferably used in view of productivity.

As a compound having at least two (meth)acryloyloxy groups in a molecule, there are mentioned as major examples an esterified compound obtained from one mole of a polyol and two moles or more of (meth)acrylic acids or derivatives thereof, and an esterified compound obtained from a polyol, a polyvalent carboxylic acid or an anhydride thereof, and (meth)acrylic acid or a derivative thereof.

Furthermore, specific examples of the esterified compound obtained from one mole of polyol and two moles or more of (meth)acrylic acids or derivatives thereof include di(meth)acrylates of polyethylene glycols such as diethylene glycol di(meth)acrylate, triethylene glycol di(meth)acrylate and tetraethylene glycol di(meth)acrylate; di(meth)acrylates of alkyl diols such as 1,4-butane diol di(meth)acrylate, 1,6-hexane diol di(meth)acrylate and 1,9-nonane diol di(meth) acrylate; poly(meth)acrylates of not less than trifunctional polyols such as trimethylolpropane tri(meth)acrylate, trimethylolethane tri(meth)acrylate, pentaglycerol tri(meth)acrylate, pentaerythritol tri(meth)acrylate, pentaerythritol tetra(meth) acrylate, glycerin tri(meth)acrylate, dipentaerythritol tri(meth)acrylate, dipentaerythritol tetra(meth)acrylate, dipentaerythritol penta(meth)acrylate, dipentaerythritol hexa(meth)acrylate, tripentaerythritol tetra(meth)acrytate, tripentaerythritol penta(meth)acrylate, tripentaerythritol hexa(meth)acrylate and tripentaerythritol hepta(meth)acrylate.

Furthermore, in the esterified compound obtained from a polyol, a polyvalent carboxylic acid or an anhydride thereof and a (meth)acrylic acid or a derivative thereof, examples of preferable combination of a polyol, a polyvalent carboxylic acid or an anhydride thereof and a (meth)acrylic acid include malonic acid/trimethylolethane/(meth)acrylic acid, malonic acid/trimethylolpropane/(meth)acrylic acid, malonic acid/glycerin/(meth)acrylic acid, malonic acid/pentaerythritol/(meth)acrylic acid, succinic acid/trimethylolethane/(meth)acrylic acid, succinic acid/trimethylolpropane/(meth) acrylic acid, succinic acid/glycerin/(meth)acrylic acid, succinic acidlpentaerythritoll(meth)acrylic acid, adipic acid/trimethylolethane/(meth)acrylic acid, adipic acid/trimethylolpropane/(meth)acrylic acid, adipic acid/glycerin/(meth)acrylic acid, adipic acid/pentaerythritol/(meth)acrylic acid, glutaric acid/trimethylolethane/(meth)acrylic acid, glutaric acid/trimethylolpropane/(meth)acrylic acid, glutaric acid/glycerin/(meth)acrylic acid, glutaric acid/pentaerythritol/(meth)acrylic acid, sebacic acid/trimethylolethane/(meth)acrylic acid, sebacic acid/trimethylolpropane/(meth)acrylic acid, sebacic acid/glycerin/(meth)acrylic acid, sebacic acid/pentaerythritol/(meth)acrylic acid, fumaric acid/trimethylolethane/(meth)acrylic acid, fumaric acid/trimethylolpropane/(meth)acrylic acid, fumaric acid/glycerin/(meth)acrylic acid, fumaric acid/pentaerythritol/(meth)acrylic acid, itaconic acid/trimethylolethane/(meth)acrylic acid, itaconic acid/trimethylolpropane/(meth)acrylic acid, itaconic acid/glycerin/(meth)acrylic acid, itaconic acid/pentaerythritol/(meth)acrylic acid, maleic anhydride/trimethylolethane/(meth)acrylic acid, maleic anhydride/trimethylolpropane/(meth)acryfic acid, maleic anhydride/glycerin/(meth) acrylic acid and maleic anhydride/pentaerythritol/(meth)acrylic acid.

Other examples of the compound having at least two (meth)acryloyloxy groups in a molecule include urethane (meth)acrylates, which are obtained with reaction of a polyisocyanate (1 mole) obtained through trimerization of a diisocyanate such as trimethylolpropanetoluylene diisocyanate, hexamethylene diisocyanate, tolylene diisocyanate, diphenylmethane diisocyanate, xylene diisocyanate, 4,4'-methylene bis(cyclohexylisocyanate), isophorone diisocyanate and trimethylhexamethylene diisocyanate, with an acrylic monomer (3 moles or more) having an active hydrogen such as 2-hydroxyethyl (meth)acrylate, 2-hydroxypropyl (meth)acrylate, 2-hydroxy-3-methoxypropyl (meth)acrylate, N-methylol (meth)acrylamide, N-hydroxy (meth)acrylamide, 15,3-propanetriol-1,3-di(meth)acrylate and 3-acryloyloxy-2-hydroxypropyl (meth)acrylate; a poly[(meth)acryloyloxyethylene]isocyanurate such as a di(meth)acrylate or a tri(meth)acrylate of tris(2-hydroxyethyl)isocyanuric acid; an epoxypoly (meth)acrylate; and a urethane poly (meth)acrylate. The term "(meth)acry" used herein refers to "methacry" or "acry".

Examples of the active energy ray decomposable polymerization initiator include carbonyl compounds such as benzoin, benzoin methyl ether, benzoin ethyl ether, benzoin isopropyl ether, benzoin isobutyl ether, acetoin, butyroin, toluoyne, benzyl, benzophenone, p-methoxybenzophenone, 2,2-diethoxyacetophenone, α,α-dimethoxy-α-phenyl acetophenone, methyl phenyl glyoxylate, ethyl phenyl glyoxylate, 4,4'-bis(dimethylamino)benzophenone, 1-hydroxy-cyclohexyl-phenyl-ketone and 2-hydroxy-2-methyl-1-phenylpropan-1-on; sulfur compounds such as tetramethyl thiuram monosulfide and tetramethyl thiuram disulfide; and phosphorus compounds such as 2,4,6-trimethylbenzoyl diphenyl phosphine oxide, bis(2,4,6-trimethylbenzoyl)-phenyl phosphine oxide and benzoyl diethoxyphosphine oxide.

An addition amount of the active energy ray decomposable polymerization initiator in 100 parts by mass of an ultraviolet curable mixture is preferably 0.1 part by mass or more in view of hardenability by ultraviolet irradiation, and preferably 10 parts by mass or less in view of maintaining satisfactory color tone of a hard coat layer. Furthermore, two types or more of active energy ray decomposable polymerization initiators may be used simultaneously.

To the ultraviolet curable mixture, if necessary, various types of components such as a slip property improver, a leveling agent, inorganic fine particles and a photostabilizer (UV absorber, HALS, etc.) may be further added. In view of the transparency of a laminate, the addition amount of the components in 100 parts by mass of the ultraviolet curable mixture is preferably 10 parts by mass or less.

The hard coat layer preferably has a film thickness of 1 μm to 20 μm. In the case that the film thickness falls within the range, sufficient surface hardness can be ensured, warpage of the film due to a coating film layer can be reduced, with the result that good appearance can be obtained.

Methods for forming functional layers such as a low refractive-index layer, a high refractive-index layer, an antistatic layer and a hard coat layer are not particularly limited. Examples of the method include a casting method, a roller coating method, a bar coating method, a spray coating method, an air-knife coating method, a spin coating method, a flow-coating method, a curtain coating method, a film covering method and a dipping method.

A film containing a substrate film and an anti-soiling film or anti-soiling laminated film formed on the surface of the substrate film is called a transfer film. The anti-soiling film used herein may be a cured anti-soiling film.

The anti-soiling film, cured anti-soiling film and anti-soiling laminated film are collectively called a transfer-film unit. The term "transfer" means that layers (films) formed on a substrate is moved onto another substrate. The "anti-soiling film" includes an uncured anti-soiling film and the cured anti-soiling film.

As the resin substrate to which the anti-soiling function is added with the transfer film, there are mentioned a molded product of a polymer such as polymethyl methacrylate, polycarbonate, a copolymer mainly constituted of a methyl methacrylate unit, polystyrene, or a styrene-methyl methacrylate copolymer. Furthermore, to the resin substrate, additives such as a colorant and a photo-diffusing agent may be added. The thickness of the resin laminate is preferably 0.2 mm or more in view of mechanical strength, and preferably 10 mm or less in view of productivity.

As a method for manufacturing the resin substrate, a continuous manufacturing process is preferred. For example, an extrusion process and a continuous casting process are mentioned. Since heat resistance is satisfactory, the resin substrate is preferably manufactured with the continuous casting process. In the method for manufacturing the resin substrate with a continuous casting process, a polymerizable mixture is continuously injected in a space surrounded by a pair of endless belts and gaskets following their both ends, cast-polymerization is performed, and to a resin plate is formed, which is then removed from the endless belts.

Next, a method for manufacturing the resin laminate according to an embodiment of the present invention will be described.

A method for manufacturing the resin laminate according to an embodiment of the present invention is a method for obtaining the laminate with using the transfer film mentioned above. The method is advantageous over a conventional method for sequentially manufacturing a film such as a dipping method, a roll coating method, and a spin coating method, in view of productivity and surface appearance.

First, a method for manufacturing the resin laminate having the adhesive layer will be described.

In the first step, the transfer film is prepared with forming of the transfer-film unit (the anti-soiling film or the anti-soiling laminated film) on the substrate film, as described above.

In the second step, the transfer-film unit, which is the surface portion of the transfer film, and the resin substrate are laminated with the adhesive layer interposed between them. The adhesive layer may be formed in advance on the side of the transfer film or on the side of the resin substrate. The component forming the adhesive layer is not particularly limited; for example, a thermoplastic resin is mentioned.

In the case that the adhesive layer containing the thermoplastic resin is used as the adhesive layer, the thermoplastic resin is dissolved in a solvent and applied, the solvent is evaporated to dryness, and the adhesive layer is formed. The transfer-film unit and the resin substrate are laminated with the adhesive layer interposed between them and integrated with application of pressure and/or heat. Examples of the thermoplastic resin include an acrylic resin, a chlorinated olefin resin, a vinyl chloride-vinyl acetate copolymer resin, a maleic acid resin, a chlorinated rubber resin, a cyclized rubber resin, a polyamide resin, a coumarone indene resin, an ethylene-vinyl acetate copolymer resin, a polyester resin, a polyurethane resin, a styrene resin, a butyral resin, a rosin resin and an epoxy resin.

In the third step, the substrate film is removed while there is leaved the transfer-film unit (the anti-soiling film or the anti-soiling laminated film) laminated on the resin substrate. In this manner, the transfer-film unit and the resin substrate are integrated with the adhesive layer interposed between them, and a laminate is obtained.

Next, a method for manufacturing a resin laminate with using a cured coating film layer formed with curing of an active energy ray-curable mixture as the adhesive layer will be described.

In the first step, the transfer film is prepared in the same manner as in the aforementioned manufacturing method.

In the second step, the transfer-film unit, which is the surface portion of the transfer film, and the resin substrate are laminated with the active energy ray-curable mixture interposed between them. The active energy ray-curable mixture is applied with use of a roll coat, bar coat or a slit die for forming of a coating layer. To prevent inclusion of air in adhering, it is preferred to apply an excessive amount of the ultraviolet curable mixture onto the transfer film.

As a method for adhering the transfer film having the coating layer formed thereon to the resin substrate, a

method of pressurizing with a rubber roll is mentioned. At this time, the surface temperature of the resin substrate is preferably set to be 40˚C to 100˚C. In the case that the temperature falls within the range, satisfactory adhesion can be obtained. In addition, reduction in hardness caused by excessive dissolution of the substrate can be suppressed, and further yellowing of the coating film can be mitigated. The surface temperature of the resin substrate can be controlled with conditions such as the temperature and heating time of a heating unit. As a method for measuring the temperature of the resin substrate, a known method using a contact-free surface thermometer etc., is mentioned.

In the third step, an active energy ray is applied to the active energy ray-curable mixture through the transfer film for curing, and the cured coating film layer is formed. As the active energy ray, ultraviolet ray is preferred. Ultraviolet ray can be applied with the use of an ultraviolet lamp. Examples of the ultraviolet lamp include a high pressure mercury lamp, a metal halide lamp and a fluorescent ultraviolet lamp. Curing with irradiation of ultraviolet ray through the transfer film may be performed in a single step, or in two steps where the first-step curing is performed through the transfer film (the third step), and then the substrate film is removed (the fourth step), and ultraviolet ray is further applied as the second-step curing. In the case that a curable resin other than the ultraviolet curable mixture is used, an active energy ray such as electron beam and radioactive ray is appropriately selected and applied through the transfer film, and then curing can be made.

In the fourth step, the substrate film is removed while there is remained the cured coating film layer and the anti-soiling film or the anti-soiling laminated film laminated on the resin substrate. More specifically, the transfer-film unit of the transfer film is transferred onto the resin substrate with the cured coating film layer interposed between them.

The method using the cured coating film layer, which is formed with curing of the ultraviolet curable mixture, as the adhesive layer, is preferred, because the transfer-film unit is transferred and a hard coat property can be added to the laminate at the same time. Furthermore, the ultraviolet curable mixture used in this method has high flowability. Therefore, air bubbles once introduced therein can be easily removed with a rubber roll and the resultant laminate can acquire good appearance. Also in view of this, this method is preferable, In the case that the aforementioned steps are continuously performed, the transfer-film unit can be continuously transferred to a less flexible resin substrate.

As another manufacturing method, an in-mold transfer method is mentioned. In the in-mold transfer method, the transfer film is placed in a cavity of a mold for injection molding. Then a heat-molten resin is injected onto the layer to be transferred of the transfer film, the transfer film is provided on a transfer-film receiving object formed of the heat-molten resin, followed with removing of the substrate film. The laminate can be obtained with such an in-mold transfer method.

The heat-meltable resin is not particularly limited as long as the resin can be melted with heat treatment and can provide functions as an adhesive. Examples thereof include an acrylic resin, a polycarbonate resin, a styrene resin (a styrene-methyl methacrylate copolymer resin, an ABS resin, an AS resin, a polyphenylene oxide-styrene copolymer resin, etc.), a polyolefin resin (polyethylene, polypropylene, etc.) and an olefin-maleimide copolymer resin.

Of these, a heat-meltable resin having a glass transition temperature (Tg) of 80˚C or more is preferable and a heat-meltable resin having a glass transition temperature of 100˚C or more is more preferable since physical properties rarely change even under a high temperature environment. Examples of the heat-meltable resin having such a high glass transition temperature include an acrylic resin such as polymethyl methacrylate (PMMA, Tg: 100˚C), a polycarbonate resin (PC, Tg: 140˚C) and an olefin-maleimide copolymer resin (Tg: 140˚C).

The transfer-film receiving object for receiving the transfer film having the anti-soiling film or the anti-soiling laminated film according to an embodiment of the present invention is not particularly limited. Various materials can be mentioned other than the resin substrate mentioned above. Examples of the transfer-film receiving object include a board material on which a uniform-thickness coating layer is not easy to be formed, a less flexible object and support, and an object such as glass and ceramics.

The substrate (laminate) having the anti-soiling film or the anti-soiling laminated film transferred from the transfer film can be used, for example, in front panels of various displays such as a word processor, a computer, a television, a display panel, and a mobile phone; surfaces of light guiding plates for liquid crystal display devices; optical lenses such as sunglass lens formed of a transparent plastics, prescription glass lens and finder lens of a camera; a display unit of a measuring gauge, window glasses of an automobile and a train; and an information panel. Note that, these substrates can effectively serve as the substrate similarly to the resin, even in the case that they are formed of a material other than the resin, for example, formed of glass.

The resin laminate obtained with the manufacturing method according to an embodiment of the present invention can be suitably used as a front panel of an image displaying apparatus such as a CRT, a plasma display, a liquid crystal display, an electroluminescence display, or an electronic paper. Furthermore, the resin laminate can be used as a surface protective resin plate of a solar battery module. In this case, the structure of a solar battery module is not particularly limited; however, there may be used a known structure having a surface protective resin plate, a filler, a photovoltaic device, a filler, a rear-surface protective sheet laminated in the order from a light incident surface. Examples

Now, the present invention will be described in detail by way of Examples, but the present invention is not limited to these. Abbreviations of the compounds used in Examples and Comparative Examples are as follows.

"TAS": a condensation mixture containing succinic acid/trimethylolethane/acrylic acid in molar ratio of 15:4 (TME-AA-SA ester mixture manufactured by Osaka Organic Chemical Industry Ltd.),
"C6DA": 1,6-hexane diol diacrylate (manufactured by Osaka Organic Chemical Industry Ltd.),
"M305": pentaerythritol triacrylate, trade name: ARONIX M-305 (manufactured by Toagosei Co., Ltd.),
"M400": dipentaerythritol hexaacrylate, trade name: ARONIX M-400 (manufactured by Toagosei Co., Ltd.),
"OPTOOL DAC": compound (A) having a perfluoropolyether group and an active energy ray-reactive group, solid-content concentration: 20 % by mass, 2,2,3,3-tetrafluoro-1-propanol solution (trade name, manufactured by Daikin Industries, Ltd.)
"UV3570": polydimethyl siloxane having a polyester-modified acryl group (trade name: BYK-UV3570 manufactured by BYK Japan KK),
"Viscoat-8FM": 1H,1H,5H-octafluoromethacrylate (trade name, manufactured by Osaka Organic Chemical Industry Ltd.),
"DEFENSA FH-800ME": an ultraviolet curable anti-soiling coating material containing a perfluoroalkyl group, solid-content concentration: 90 % by mass, a methylisobutyl ketone solution (trade name, manufactured by DIC Corporation),
"OPTOOL AES-4" a fluorine group-containing silane coupling agent, solid-content concentration: 20 % by mass, a perfluoro hexane solution (trade name, manufactured by Daikin Chemical Sales, Ltd.),
"DAROCUR TPO": 2,4,6-trimethylbenzoyl-diphenyl-phosphine oxide (trade name, manufactured by Ciba Japan KK),
IRGACURE 907: 2-methyl-1-[4-(methylthio)phenyl]-2-morpholinopropan-1-one (trade name, manufactured by Ciba Japan KK),
"IRGACURE 819": bis(2,4,6-trimethylbenzoyl)-phenyl phosphine oxide (trade name, manufactured by Ciba Japan KK),
"KBM503": 3-methacryloxypropyl trimethoxysilane (trade name, manufactured by Shin-Etsu Silicone),
"IPA-ST": colloidal silica sol, solid-content concentration: 30 % by mass, isopropyl alcohol (IPA) dispersion (trade name, manufactured by Nissan Chemical Industries, Ltd.),
"Through Rear S": hollow silica sol, solid-content concentration: 20 % by mass, isopropyl alcohol (IPA) dispersion (trade name, manufactured by JGC Catalysts and Chemicals Ltd.),
"PGM": 1-methoxy-2-propanol (manufactured by Wako Pure Chemical Industries, Ltd.),
"fluorine-containing alcohol": 2,2,3,3-tetrafiuoro-1-propanol (manufactured by Wako Pure Chemical Industries, Ltd.),
"ELCOM MR-1009SBV P-30": antimony pentaoxide sol, isopropyl alcohol (IPA) dispersion (trade name, manufactured by JGC Catalysts and Chemicals Ltd.),
"ACRYLITE EX001": a methacrylic resin plate (trade name, manufactured by Mitsubishi Rayon Co., Ltd.).

<Measurement of temperature of resin substrate>

A substrate was heated (preparatory heating), and the temperature of the substrate was measured with use of a contact-free surface thermometer (handheld type radiation thermometer IR-TA (trade name) manufactured by CHINO Corporation).

<Total luminous transmittance and haze>

Total luminous transmittance was measured in accordance with the measurement method instructed in JIS K7361-1 and haze was measured in accordance with the measurement method instructed in JfS K7136 with use of HAZE METER NDH 2000 (trade name) manufactured by Nippon Denshoku Industries Co., Ltd.

<Abrasion-resistance>

Abrasion-resistance was evaluated based on a change in haze (Δ haze) before and after an abrasion test. To describe more specifically, a circular pad of 25.4 mm in diameter attached with a #000 steel wool was placed on the cured coating film-layer surface of a resin laminate. A portion of 20 mm in distance of the surface was abraded 10 reciprocating times while load of 1 kgf (9.807 N) was applied and difference in haze values before and after abrading was obtained in accordance with the following expression.

$$[\Delta \text{ haze } (\%)] = [\text{haze value } (\%) \text{ after abrading}] - [\text{haze value } (\%) \text{ before abrading}]$$

Furthermore, the number of scratches on the sample after the abrasion test was counted.

<Evaluation of antireflection performance>

The rear surface of a resin laminate was rubbed with sandpaper for obtaining a rough surface and then matte black paint was applied with spray on the surface. In this manner, a sample was prepared. The reflectance of the sample surface was measured with use of a spectrophotometer ("U-4000" (trade name) manufactured by Hitachi, Ltd.) at an incident angle of 5°, within the wavelength range of 380 to 780 nm in accordance with the measurement method instructed in JIS R3106.

<Contact angle>

(a) Contact angle to water

To an anti-soiling film formed on the surface of a resin laminate, a single drop of pure water (0.2 μL) was dropped at 23°C, in the environment having a relative humidity 50%. The contact angle formed between a water repellent layer formed on the resin laminate and water was measured with use of a portable contact-angle measuring meter ("PG-X" (trade name) manufactured by Fibro System AB). In this manner, the contact angle to water was obtained.

(b) Contact angle to triolein

The contact angle formed between the water repellent layer formed on the resin laminate and triolein was measured in the same as the method for evaluating the contact angle to water except that triolein was used in place of pure water. In this manner the contact angle to triolein was obtained

<Oil-based ink wiping-off performance>

A line was drawn on the surface of a cured coating with an oil-based (black) marker pen ("My Name" (trade name), manufactured by Sakura Color Products Corp.) and wiped three minutes later with a wiping cloth ("KIMTOWEL." (trade name) manufactured by Nippon Paper Crecia Co., Ltd.). At this time, degree of wiping-off of the oil-based ink was visually evaluated in accordance with the following criteria.

"○": Ink is completely wiped off after wiping 5 times,
"△": Line-mark slightly remains after wiping 5 times,
"×": Part of ink or whole ink remains after wiping 5 times.

<Adhesion>

Adhesion was evaluated with the cross-cut test (JIS K5600-5-6). A grid removal test was performed with use of 4 boards having 25 grids. Adhesion was represented with the number of grids remaining unremoved in 100 grids.

<Method for measuring film thickness>

A sample having a thickness of 100 nm was cut out with a microtome and observed with a transmission electron microscope (JEM-1010 manufactured by JEOL Ltd.).

<Perspiration resistance>

An artificial perspiration was prepared in accordance with Method A of JIS L0848 (the test method for color fastness to perspiration). Thereafter, a sample was cut into pieces of 50 × 50 mm, and absorbent cotton- pieces of 30 × 30 mm were placed on the sample pieces and then the artificial perspiration was dropped on the absorbent cotton pieces with a syringe to wet the sample pieces. The sample pieces were allowed to stand still in a constant temperature

and humidity room of 45˚C and 95% for 96 hours. After washing with water, the sample pieces were visually evaluated in accordance with the following criteria.

"○": Change is not visually observed,
"×": Abnormality such as discoloration is visually observed.

<Surface resistance value of resin laminate>

The surface resistance value (Ω/□) of a resin laminate at the side of an antistatic laminate film was measured at an application voltage of 500 V for 1 minute with a super megohmmeter (trade name: ULTRA MEGOHMMETER MODEL SM-10E manufactured by TOA) at a measurement temperature of 23˚C in the relative humidity condition of 50%. The sample subjected to the measurement was previously conditioned at 23˚C and relative humidity of 50% for a day.

[Production Example 1] Preparation of surface modified silica sol (1)

To a 4-neck flask (reaction container) equipped with a stirrer and a condenser, IPA-ST (63 g) was placed and KBM503 (12 g) was added. Thereafter, water (4.4 g) was added with stirring and an aqueous 0.01 N hydrochloric acid solution (0.1 g) was added. The reaction system was heated at 80˚C for 2 hours. Thereafter, the pressure of the reaction system was reduced and a volatile content was distilled off until a solid-content concentration reached 40 % by mass. To the reaction system, toluene (38 g) was added and heated at 80˚C for 2 hours. Thereafter, the pressure of the reaction system was reduced and a volatile content was distilled off until a solid-content concentration reached 60 % by mass and the reaction system was again heated at 80˚C for 2 hours, and surface modified silica sol (1) was obtained. The resultant silica sol (1) was a colorless transparent liquid and the solid-content concentration thereof was 60 % by mass. Note that, the solid-content concentration was calculated with difference in mass before and after the volatilization of the solvent when the resultant silica sol (1) was heated in the environment of 80˚C for 3 days and the solvent was volatized.

[Production Example 2] Preparation of surface modified silica sol (2)

A surface modified silica sol (2) was obtained in the same manner as in Production Example 1 except that Through Rear S was used in place of IPA-ST used in Production Example 1. The resultant silica sol (2) was white turbid liquid and the solid-content concentration thereof was 60 % by mass. The solid-content concentration was obtained in the same manner as in Production Example 1.

[Preparation of anti-soiling compositions 1 to 19]

Anti-soiling compositions 1 to 19 were prepared in accordance with the blending components and blending ratios shown in Table 1 and Table 2.

[Example 1]

To a PET film (trade name: AC-J, manufactured by Reiko Co., Ltd.) attached with a melamine stripping layer of 100 μ.m, anti-soiling composition 1 was applied with bar-coater No. 10, and dried at 80˚C for 15 minutes, and anti-soiling film 1 was prepared. The thickness of the resultant anti-soiling film was calculated from the solid-content concentration, applying amount and applying area of anti-soiling composition 1. The thickness was 93 nm.

Subsequently, onto the substrate (ACRYLITE EX001) of 2 mm in thickness heated to 60˚C, an ultraviolet curable mixture composed of TAS (35 parts by mass), C6DA (30 parts by mass), M305 (10 parts by mass), M400 (25 parts by mass) and DAROCUR TPO (2 parts by mass) was applied.

Subsequently, the PET film having anti-soiling film 1 formed thereon and the substrate having a coating film of the ultraviolet curable mixture formed thereon were laminated such that anti-soiling film 1 was brought into contact with the coating film of the ultraviolet curable mixture and allowed to adhere under application of pressure so as to obtain a 15 pm-thick coating film of the ultraviolet curable mixture without containing air bubbles by squeezing out the excessive ultraviolet curable mixture using a rubber roll having a JIS hardness of 40˚. Note that, the thickness of the coating film of the ultraviolet curable mixture was calculated from the supply amount and spread area of the ultraviolet curable mixture.

Subsequently, the resultant laminate was heated and kept at 60˚C for 60 seconds. Thereafter, the laminate was irradiated with ultraviolet ray via the PET film with feeding of the laminate through a position at a level of 20 cm below a metal halide lamp having a power of 9.6 kW at a speed of 2.5 m/min, In this manner, the ultraviolet curable mixture was cured and a cured coating film layer was prepared. At this time, the anti-soiling film was also cured.

Thereafter, the PET film was removed. As a result, anti-soiling film 1 was transferred to the substrate and a resin laminate having anti-soiling film 1 provided on the surface layer was obtained. The cured coating film layer of the resultant resin laminate had a film thickness of 13 μm.

The total luminous transmittance of the resultant resin laminate was 92% and the haze was 0.2%. Transparency was excellent.

An increase in haze after the surface layer was abraded was 0.05% and the number of scratches was one.

As a result of an adhesion test, adhesion was satisfactory without any removal of the coating film.

The contact angle of water was 105° and the triolein contact angle was 65°. The oil-based ink wiping-off performance was at a satisfactory level. The ink was completely wiped off with wiping 5 times. As a result of perspiration resistance evaluation, abnormality was not visually observed.

These evaluation results are shown in Table 1.

[Example 2]

A resin laminate having anti-soiling film 2 provided as the surface layer of the laminate was prepared in the same manner as in Example 1 except that anti-soiling composition 2 was used in place of anti-soiling composition 1 used in Example 1. The evaluation results are shown in Table 1.

[Example 3]

A resin laminate having anti-soiling film 3 provided as the surface layer of the laminate was prepared in the same manner as in Example 1 except that anti-soiling composition 3 was used in place of anti-soiling composition 1 used in Example 1. The evaluation results are shown in Table 1.

[Example 4]

A resin laminate having anti-soiling film 4 provided as the surface layer of the laminate was prepared in the same manner as in Example 1 except that anti-soiling composition 4 was used in place of anti-soiling composition 1 used in Example 1. The evaluation results are shown in Table 1.

[Example 5]

A resin laminate having anti-soiling film 5 provided as the surface layer of the laminate was prepared in the same manner as in Example 1 except that anti-soiling composition 5 was used in place of anti-soiling composition 1 used in Example 1. The evaluation results are shown in Table 1.

[Example 6]

A resin laminate having anti-soiling film 6 provided as the surface layer of the laminate was prepared in the same manner as in Example 1 except that anti-soiling composition 6 was used in place of anti-soiling composition 1 used in Example 1. The evaluation results are shown in Table 1.

[Example 7]

A resin laminate having anti-soiling film 7 provided as the surface layer of the laminate was prepared in the same manner as in Example 1 except that anti-soiling composition 7 was used in place of anti-soiling composition 1 used in Example 1. The evaluation results are shown in Table 1.

[Example 8]

A resin laminate having anti-soiling film 8 provided as the surface layer of the laminate was prepared in the same manner as in Example 1 except that anti-soiling composition 8 was used in place of anti-soiling composition 1 used in Example 1. The evaluation results are shown in Table 1.

[Example 9]

A resin laminate having anti-soiling film 9 provided as the surface layer of the laminate was prepared in the same manner as in Example 1 except that anti-soiling composition 9 was used in place of anti-soiling composition 1

used in Example 1. The evaluation results are shown in Table 1.

[Example 10]

A resin laminate having anti-soiling film 10 provided as the surface layer of the laminate was prepared in the same manner as in Example 1 except that anti-soiling composition 10 was used in place of anti-soiiing composition 1 used in Example 1. The evaluation results are shown in Table 1.

[Example 11]

A resin laminate having anti-soiling film 11 provided as the surface layer of the laminate was prepared in the same manner as in Example 1 except that anti-soiling composition 11 was used in place of anti-soiling composition 1 used in Example 1. The evaluation results are shown in Table 1.

[Example 12]

First, anti-soiling film 1 was formed on a PET film provided with a melamine stripping layer in the same manner as in Example 1.

Next, a conductive high refractive-index composition prepared as shown below was applied onto anti-soiling film 1 by an applicator (clearance; memory 4) and dried at 80°C for 10 minutes.

(Formulation of conductive high refractive-index composition)

- ELCOM MR-1009SBV P-30 (solid-content concentration: 30 % by mass, IPA dispersion, antimony pentaoxide sol): 160 parts by mass,
- M400: 52 parts by mass,
- IRGACURE 907: 5 parts by mass,
- Isopropyl alcohol additionally added: 290 parts by mass.

Thereafter, the PET film on which the anti-soiling film and the coating film of the conductive high refractive-index composition were formed was fed through a position at a level of 20 cm below a high pressure mercury lamp having a power of 9.6 kW at a speed of 2.5 m/min. The coating film was cured in this manner, and there was prepared an anti-soiling laminated film composed of the anti-soiling film and the conductive high refractive-index hard coat layer on the PET film.

In the meantime, a substrate having a coating film of an ultraviolet curable mixture formed thereon was prepared in the same manner as in Example 1.

Thereafter, the PET film having an anti-soiling laminated film formed thereon and the substrate having the coating film of an ultraviolet curable mixture formed thereon were laminated such that the high refractive-index layer of the anti-soiling laminated film was brought into contact with the coating film of an ultraviolet curable mixture, and the resultant laminate was pressurized, in the same manner as in Example 1.

Thereafter, cure treatment was performed in the same manner as in the Examples and the PET film was removed and there was obtained a resin laminate which has the anti-soiling film provided as the surface of the laminate, and the conductive high refractive-index hard coat layer provided between the anti-soiling film and the substrate.

From the measurement results of film thickness of the obtained resin laminate, it was determined that the thickness of the anti-soiling film (a low refractive-index anti-soiling layer) was 100 nm, and the thickness of the conductive high refractive-index hard coat layer was 1 μm.

The evaluation results are shown in Table 1.

The total luminous transmittance of the resultant resin laminate was 94% and the haze was 0.4%. Transparency was excellent.

An increase in haze after the surface layer was abraded was 0.05% and the number of scratches was one.

As a result of an adhesion test, adhesion was satisfactory without any removal of the coating film.

The contact angle of water was 107° and the triolein contact angle was 67°. The oil-based ink wiping-off performance was at a satisfactory level. The ink was completely wiped off with wiping 5 times. As a result of perspiration resistance evaluation, abnormality was not visually observed.

As a result of measuring reflectance, a minimum reflectance was obtained at 600 nm and a reflectance thereof was 1.8%.

The surface resistance value was 4 × $10^{10}$ Ω/□ and the laminate had antistatic performance.

[Example 13]

To an eggplant-flask equipped with a condenser, an isocyanate skeleton-containing acrylate compound (product name: Karenz BEI manufactured by Showa Denko K.K.) (2.6 g), a perfluoropolyether compound (product name: FLUOROLINK D10H, manufactured by Solvay Solexis K.K.) (8 g) and dibutyl tin dilaurate (0.005 g) were added. The mixture was stirred at 50˚C for 6 hours. The resultant white turbid sticky liquid containing a fluorine-containing urethane compound was diluted with addition of methyl ethyl ketone up to a solid-content concentration of 20 % by mass, and a liquid containing a fluorine-containing urethane compound (compound (A)) was obtained.
Next, anti-soiling composition 20 was obtained with using of the liquid containing a fluorine-containing urethane compound and in accordance with the blending components and blending ratio shown in Table 1.
Thereafter, a resin laminate having anti-soiling film 12 provided as the surface layer of the laminate was formed in the same manner as in Example 1 except that anti-soiling composition 20 was used in place of anti-soiling composition 1 used in Example 1. The evaluation results are shown in Table 1.

[Comparative Examples 1 to 8]

Anti-soiling films 12 to 19 were formed in the same manner as in Example 1 except that anti-soiling compositions 12 to 19 (Table 2) were used in place of anti-soiling composition 1 used in Example 1.
The evaluation results are shown in Table 2.
Comparative Example 1: Since the content of fluorine group- containing polyether compound (A) is less than 20 parts by mass, the water repellent and oil repellent properties of the laminate were insufficient.
Comparative Example 2: Since the content of fluorine group-containing polyether compound (A) is 75 parts by mass or more, the hardness of the laminate is insufficient and abrasion-resistance was low.
Comparative Example 3: Since inorganic fine particles (B) are not added, and the content of fluorine group-containing polyether compound (A) is 75 parts by mass or more, the hardness of the laminate is insufficient, abrasion-resistance was low and water repellant property and oil repellent property were insufficient.
Comparative Example 4: Since inorganic fine particles (B) are not added, the water repellant property and oil repellent property of the laminate were insufficient.
Comparative Examples 5 to 8: Since a specific anti-soiling component according to the present invention is not added, water repellant property and oil repellent property of the laminates were insufficient.
[Table 1]

| | | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|
| Anti-soiling composition | | | 1 | 2 | 3 | 4 | 5 | 6 | 7 | 8 | 9 | 10 | 11 | 1 | 20 |
| Compound (A) | OPTOOL DAC | Solid content (parts by mass) | 0.50 | 0.50 | 0.25 | 0.70 | 0.77 | 0.50 | 0.50 | 0.50 | 0.50 | 0.50 | 0.50 | 0.50 | 0 |
| | | Solution (parts by mass) | 2.50 | 2.50 | 1.25 | 3.50 | 3.85 | 2.50 | 2.50 | 2.50 | 2.50 | 2.50 | 2.50 | 2.50 | 0 |
| | Fluorine-containing urethane compound | Solid content (parts by mass) | 0 | 0 | 0 | 0 | 0 | 0 | 0 | 0 | 0 | 0 | 0 | 0 | 0.50 |
| | | Solution (parts by mass) | 0 | 0 | 0 | 0 | 0 | 0 | 0 | 0 | 0 | 0 | 0 | 0 | 2.50 |
| Inorganic fine particles (B) | Silica sol (1) | Solid content (parts by mass) | 0.50 | 0 | 0.75 | 0.30 | 0.23 | 0.50 | 0.50 | 0.50 | 0.50 | 0.50 | 0.50 | 0.50 | 0.50 |
| | | Solution (parts by mass) | 0.83 | 0 | 1.25 | 0.50 | 0.38 | 0.83 | 0.83 | 0.83 | 0.83 | 0.83 | 0.83 | 0.83 | 0.83 |
| | Silica sol (2) | Solid content (parts by mass) | 0 | 0.50 | 0 | 0 | 0 | 0 | 0 | 0 | 0 | 0 | 0 | 0 | 0 |
| | | Solution (parts by mass) | 0 | 0.83 | 0 | 0 | 0 | 0 | 0 | 0 | 0 | 0 | 0 | 0 | 0 |

(continued)

| | | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|
| Anti-soiling composition | | | 1 | 2 | 3 | 4 | 5 | 6 | 7 | 8 | 9 | 10 | 11 | 1 | 20 |
| Photoinitiator | IRGACURE819 | Solid content (parts by mass) | 0.05 | 0.05 | 0.05 | 0.05 | 0.05 | 0.05 | 0.05 | 0.05 | 0.05 | 0.05 | 0 | 0.05 | 0.05 |
| | IRGACURE907 | Solid content (parts by mass) | 0 | 0 | 0 | 0 | 0 | 0 | 0 | 0 | 0 | 0 | 0.05 | 0 | 0 |
| Dilution solvent | PGM | Parts by mass | 98.5 | 98.5 | 98.5 | 98.5 | 98.5 | 700 | 150 | 30 | 5 | 0 | 98.5 | 98.5 | 98.5 |
| | Fluorine-containing alcohol | Parts by mass | 0 | 0 | 0 | 0 | 0 | 0 | 0 | 0 | 0 | 98.5 | 0 | 0 | 0 |
| Proportion of compound (A) in 100 parts by mass of solid content | | Parts by mass | 47.6 | 47.6 | 23.8 | 66.7 | 73.3 | 47.6 | 47.6 | 47.6 | 47.6 | 47.6 | 47.6 | 47.6 | 47.6 |
| Solid-content concentration | | Parts by mass | 1.0 | 1.0 | 1.0 | 1.0 | 1.0 | 0.15 | 0.68 | 3.1 1 | 12.5 | 1.0 | 1.0 | 1.0 | 1.0 |

(continued)

| | | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|
| Anti-soiling composition | | | 1 | 2 | 3 | 4 | 5 | 6 | 7 | 8 | 9 | 10 | 11 | 1 | 20 |
| Evaluation results | Anti-soiling film | Anti-soiling film No. | 1 | 2 | 3 | 4 | 5 | 6 | 7 | 8 | 9 | 10 0 | 11 1 | 1 | 20 |
| | Total luminous transmittance | % | 92 | 92 | 92 | 92 | 92 | 92 | 92 | 91 | 90 | 92 | 92 | 94 | 92 |
| | Haze | % | 0.2 | 0.4 | 0.2 | 0.2 | 0.2 | 0.2 | 0.2 | 0.4 | 0.5 | 0.2 | 0.2 | 0.4 | 0.2 |
| | Abrasion resistance | △ haze % | 0.05 | 0.05 | 0.02 | 0.1 1 | 0.15 5 | 0.02 | 0.05 | 0.15 5 | 0.18 | 0.05 | 0.05 | 0.05 | 0.05 |
| | Abrasion resistance | Number of scratches | 1 | 1 | 0 | 3 | 5 | 0 | 1 | 5 | 7 | 1 | 1 | 1 | 1 |
| | Adhesion evaluation | | 100/100 | 100/100 | 100/100 | 100/100 | 100/100 | 100/100 | 100/100 | 100/100 | 100/100 | 100/100 | 100/100 | 100/100 | 100/100 |
| | Contact angle (water) | degree | 105 | 105 | 100 | 110 | 115 | 98 | 105 | 112 | 115 | 105 | 105 | 107 | 92 |
| | Contact angle (triolein) | degree | 65 | 65 | 58 | 68 | 70 | 55 | 65 | 70 | 74 | 65 | 65 | 67 | 50 |
| | Oil-based ink wiping-off performance | | ○ | ○ | △ | ○ | ○ | △ | ○ | ○ | ○ | ○ | ○ | ○ | △ |
| | Perspiration resistance | | ○ | ○ | ○ | ○ | ○ | ○ | ○ | ○ | ○ | ○ | ○ | ○ | ○ |

[Table 2]

| | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| Anti-soiling composition | | | 12 | 13 | 14 | 15 | 16 | 17 | 18 | 19 |
| Compound (A) | OPTOOL DAC | Solid content (parts by mass) | 0.18 | 0.85 | 1.00 | 0.50 | 0 | 0 | 0 | 0 |
| | | Solution (parts by mass) | 0.90 | 4.25 | 5.00 | 2.50 | 0 | 0 | 0 | 0 |
| Compound (R) | *1 - *4 | Solid content (parts by mass) | 0 | 0 | 0 | 0 | *1: 0.50 | *2: 0.50 | *3: 0.50 | *4: 0.50 |
| | | Solution (parts by mass) | 0 | 0 | 0 | 0 | - | 0.55 | - | 2.50 |
| Inorganic fine particles (B) | Silica sol (1) | Solid content (parts by mass) | 0.80 | 0.15 | 0 | 0 | 0 | 0 | 0 | 0 |
| | | Solution (parts by mass) | 1.34 | 0.25 | 0 | 0 | 0 | 0 | 0 | 0 |

(continued)

| | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| Anti-soiling composition | | | 12 | 13 | 14 | 15 | 16 | 17 | 18 | 19 |
| Binder | M[400 | Solid content (parts by mass) | 0 | 0 | 0 | 0.50 | 0 | 0 | 0 | 0 |
| | | Solution (parts by mass) | 0 | 0 | 0 | - | 0 | 0 | 0 | 0 |
| | Silica sol (1) | Solid content (parts by mass) | 0 | 0 | 0 | 0 | 0.50 | 0.50 | 0.50 | 0.50 |
| | | Solution (parts by mass) | 0 | 0 | 0 | 0 | 0.83 | 0.83 | 0.83 | 0.83 |
| Photoinitiator | IRGACURE819 | Solid content (parts by mass) | 0.05 | 0.05 | 0.05 | 0.05 | 0.05 | 0.05 | 0.05 | 0.05 |
| Dilution solvent | PGM | Parts by mass | 98.5 | 98.5 | 95 | 96 | 98 | 99 | 99 | 99 |
| | Fluorine-containing alcohol | Parts by mass | 0 | 0 | 0 | 0 | 0 | 0 | 0 | 0 |
| Proportion of compound (A) or (R) in 100 parts by mass of solid content | | Parts by mass | 17.5 | 81.0 | 95.2 | 47.6 | 47.6 | 47.6 | 47.6 | 47.6 |
| Solid-content concentration | | Parts by mass | 1.0 | 1.0 | 1.0 | 1.1 | 1.1 | 1.0 | 1.0 | 1.0 |

(continued)

| | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| Anti-soiling composition | | | 12 | 13 | 14 | 15 | 16 | 17 | 18 | 19 |
| Evaluation results | Anti-soiling film | Anti-soiling film No. | 12 | 13 | 14 | 15 | 16 | 17 | 18 | 19 |
| | Total luminous transmittance | % | 92 | 92 | 92 | 92 | 92 | 92 | 92 | 92 |
| | Haze | % | 0.2 | 0.2 | 0.2 | 0.2 | 0.2 | 0.2 | 0.2 | 0.2 |
| | Abrasion resistance | Δ haze % | 0.05 | 1.0 | 2.0 | 0.05 | 0.05 | 0.05 | 0.05 | 0.05 |
| | Abrasion resistance | Number of scratches | 1 | 10 | 20 | 1 | 1 | 1 | 1 | 1 |
| | Adhesion evaluation | | 100/100 | 100/100 | 100/100 | 100/100 | 100/100 | 100/100 | 100/100 | 100/100 |
| | Contact angle (water) | Degree | 70 | 105 | 72 | 68 | 70 | 66 | 70 | 62 |
| | Contact angle (triolein) | Degree | 20 | 65 | 23 | 18 | 21 | 20 | 18 | 20 |
| | Oil-based ink wiping-off performance | | × | ○ | × | × | × | × | × | × |
| | Perspiration resistance | | ○ | ○ | ○ | ○ | ○ | ○ | ○ | ○ |

Compound (R) *1 Viscoat-8FM (octafluoromethacrylate)
*2 DEFENSE FH-800ME (an ultraviolet curable anti-soiling coating material containing a perfluoroalkyl group)
*3 UV3570 (silicone containing a polyester-modified acryl group)
*4 OPTOOL AES-4 (a fluorine group-containing silane coupling agent)

According to the embodiment of the present invention, an anti-soiling layer and an antireflection layer can be formed on a flexible film with wet-process roll-to-roll system. The anti-soiling layer and antireflection layer on the flexible film can be transferred to a less flexible substrate with an adhesive interposed between them. In this way, an anti-soiling function and an antireflection function can be easily and effectively added to a less flexible substrate at low cost.

According to the embodiment of the present invention, it is possible to provide a laminate, having an anti-soiling function and an antireflection function added thereto, which is suitable for use in a front panel of a display, a front panel of a solar battery, etc. Furthermore, there can be provided a laminate having excellent transparency, abrasion-resistance, and perspiration resistance in addition to anti-soiling function and antireflection function.

Industrial Applicability

According to the present invention, function can be added to a front panel, and the invention can be applied to various uses.

The present invention can be applied to uses of an anti-soiling film, and an anti-soiling laminated film having an anti-soiling function added thereto.

The resin laminate according to the present invention can be applied to uses such as a front panel of a display and a front panel of a solar battery, and can be applied to uses such as a front panel having an antireflection function added thereto.

## Claims

1. An anti-soiling composition comprising:

    compound (A) having a perfluoropolyether group and an active energy ray-reactive group; and
    inorganic fine particles (B),
    wherein compound (A) is contained in an amount of 20 parts by mass or more and 75 parts by mass or less in 100 parts by mass of a solid content of the composition.

2. The anti-soiling composition according to claim 1, wherein compound (A) has two vinyl groups in a single molecule, which are independent of the perfluoropolyether group, as the active energy ray-reactive group.

3. The anti-soiling composition according to claim 1, wherein compound (A) is a compound obtained with the reaction of a triisocyanate (C) obtained through cyclic trimerization of a diisocyanate with active hydrogen-containing compound (D); and
compound (D) comprises perfluoropolyether (D-1) having an active hydrogen and monomer (D-2) having an active hydrogen and a carbon-carbon double bond.

4. The anti-soiling composition according to claim 3, wherein perfluoropolyether (D-1) having an active hydrogen is a compound represented by the following general formula (1):

[Formula 1]

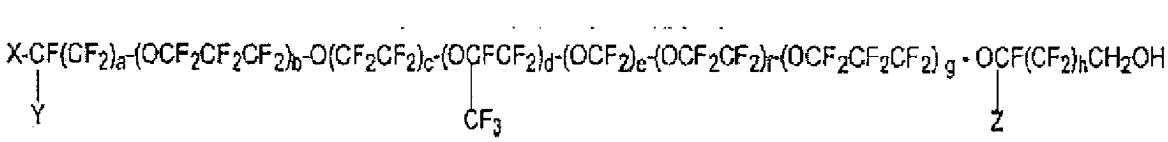

(1)

wherein X is a fluorine atom; each of Y and Z is a fluorine atom or a trifluoromethyl group, respectively; a is an integer of 1 to 16; c is an integer of 0 to 5; each of b, d, e, f, and g is an integer of 0 to 200, respectively; and h is an integer of 0 to 16.

5. The anti-soiling composition according to claim 3 or 4, wherein monomer (D-2) is at least one selected from 2-hydroxyethyl (meth)acrylate, 2-hydroxypropyl (meth)acrylate and 2-hydroxybutyl (meth)acrylate.

6. The anti-soiling composition according to claim 1, wherein compound (A) is a compound represented by the following general formula (2):

[Formula 2]

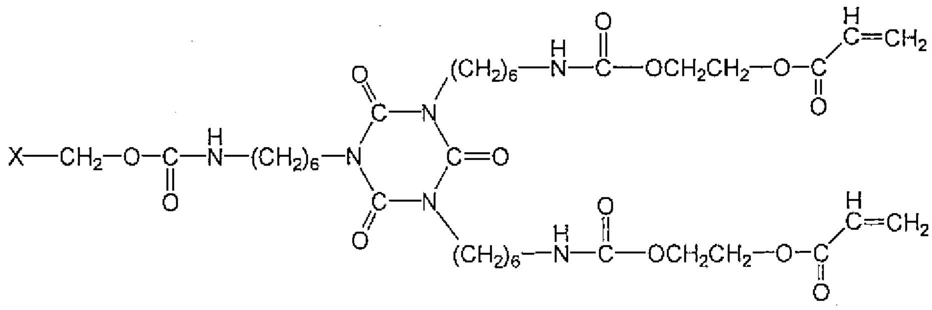

(2)

wherein X represents a perfluoropolyether group.

7. The anti-soiling composition according to any one of claims 1 to 6, wherein inorganic fine particles (B) are silica fine particles.

8. The anti-soiling composition according to claim 7, wherein the surface of inorganic fine particles (B) is treated with a hydrolyzable silane compound.

9. An anti-soiling film formed of an anti-soiling composition as recited in any one of claims 1 to 8.

10. An anti-soiling laminated film comprising:

an anti-soiling film as recited in claim 9; and
a functional layer provided on the anti-soiling film.

11. The anti-soiling laminated film according to claim 10, wherein the functional layer comprises at least one selected from a low refractive-index layer, a high refractive-index layer, a hard coat layer and an antistatic layer.

12. A transfer film comprising:

a substrate film; and
an anti-soiling film as recited in claim 9 or an anti-soiling laminated film as recited in claim 10 or 11, the film being formed on a surface of the substrate film.

13. A resin laminate comprising:

a resin substrate; and
an anti-soiling film as recited in claim 9 or an anti-soiling laminated film as recited in claim 10 or 11, the film being provided on the resin substrate.

14. A method for manufacturing a resin laminate, comprising:

forming an anti-soiling film as recited in claim 9 or an anti-soiling laminated film as recited in claim 10 or 11 on a surface of a substrate film, thereby obtaining a transfer film;
laminating the anti-soiling film or the anti-soiling laminated film of a surface of the transfer film and a resin substrate with an adhesive layer between the films; and

removing the substrate film while leaving the adhesive layer and the anti-soiling film or the anti-soiling laminated film on the resin substrate, thereby obtaining a resin laminate comprising the anti-soiling film or the anti-soiling laminated film provided on the resin substrate with the adhesive layer between the film and the resin substrate.

**15.** The method for manufacturing a resin laminate, according to claim 14, wherein, in the laminating, the anti-soiling film or the anti-soiling laminated film of the surface of the transfer film and the resin substrate are laminated with an active energy ray-curable mixture between the film and the resin substrate, the mixture serving as the adhesive layer, and
the active energy ray-curable mixture is cured with application of the active energy ray through the transfer film to form a cured coating film layer.

**INTERNATIONAL SEARCH REPORT**

International application No.
PCT/JP2010/060194

A. CLASSIFICATION OF SUBJECT MATTER
*C08F299/06*(2006.01)i, *B32B27/30*(2006.01)i, *C08G18/67*(2006.01)i, *C09D4/00* (2006.01)i, *C09D4/02*(2006.01)i, *C09D5/16*(2006.01)i, *C09D7/12*(2006.01)i

According to International Patent Classification (IPC) or to both national classification and IPC

B. FIELDS SEARCHED

Minimum documentation searched (classification system followed by classification symbols)
C08F299/00-299/08, C08F290/00-290/14, C08F2/44, C08F20/10-20/40, C08F120/10-120/40, C08F220/10-220/40, B32B27/30, C08G18/67, C09D4/00, C09D4/02, C09D5/16, C09D7/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
CA/REGISTRY(STN)

C. DOCUMENTS CONSIDERED TO BE RELEVANT

| Category* | Citation of document, with indication, where appropriate, of the relevant passages | Relevant to claim No. |
|---|---|---|
| P,X | JP 2010-77222 A (Fuji Film Kabushiki Kaisha), 08 April 2010 (08.04.2010), claims; paragraphs [0008], [0145]; examples (Family: none) | 1,2,7-15 |
| E,A | JP 2010-152331 A (Nitto Denko Corp.), 08 July 2010 (08.07.2010), claims; paragraph [0006] (Family: none) | 1-15 |
| E,A | JP 2010-152311 A (Fuji Film Kabushiki Kaisha), 08 July 2010 (08.07.2010), claims; paragraph [0166] (Family: none) | 1-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 September, 2010 (14.09.10) | 28 September, 2010 (28.09.10) |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.
PCT/JP2010/060194

C (Continuation). DOCUMENTS CONSIDERED TO BE RELEVANT

| Category* | Citation of document, with indication, where appropriate, of the relevant passages | Relevant to claim No. |
|---|---|---|
| E,A | JP 2010-159386 A (JSR Corp.), 22 July 2010 (22.07.2010), claims; paragraph [0006] (Family: none) | 1-15 |
| A | JP 2009-114248 A (Mitsubishi Rayon Co., Ltd.), 28 May 2009 (28.05.2009), claims; paragraph [0006] (Family: none) | 1-15 |
| A | JP 2008-40262 A (Daikin Industries, Ltd.), 21 February 2008 (21.02.2008), claims; paragraph [0013]; examples (Family: none) | 1-15 |
| A | JP 2006-37024 A (Daikin Industries, Ltd.), 09 February 2006 (09.02.2006), claims; paragraph [0011] (Family: none) | 1-15 |
| A | WO 2007/102370 A1 (Dow Corning Corp.), 13 September 2007 (13.09.2007), claims; paragraph [0001] & EP 1995260 A1 & KR 10-2008-0104356 A & CN 101395191 A | 1-15 |
| A | WO 2003/002628 A1 (Daikin Industries, Ltd.), 09 January 2003 (09.01.2003), claims & JP 3963169 B & US 2004/0181008 A1 & EP 1411073 A1 | 1-15 |
| A | JP 2005-126453 A (TDK Corp.), 19 May 2005 (19.05.2005), claims; paragraphs [0015], [0061] & US 2007/0148596 A1 & WO 2005/049687 A1 & CN 1871275 A | 1-15 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2003002628 A
- JP 2005126453 A
- JP 2009003354 A
- JP 2000094584 A
- JP 2005096322 A
- JP 2003103680 A